(19) **Europäisches Patentamt**

**European Patent Office**

**Office européen des brevets**

(11) Veröffentlichungsnummer: **0 280 945 B1**

(12) **EUROPÄISCHE PATENTSCHRIFT**

(45) Veröffentlichungstag der Patentschrift: **17.03.93**

(21) Anmeldenummer: **88102042.4**

(22) Anmeldetag: **12.02.88**

(51) Int. Cl.⁵: **B01D 67/00**

(54) Verfahren zum Herstellen einer Zweischichtmembran.

(30) Priorität: **05.03.87 DE 3707054**

(43) Veröffentlichungstag der Anmeldung:
**07.09.88 Patentblatt 88/36**

(45) Bekanntmachung des Hinweises auf die
Patenterteilung:
**17.03.93 Patentblatt 93/11**

(84) Benannte Vertragsstaaten:
**DE FR GB IT NL**

(56) Entgegenhaltungen:
**EP-A- 0 111 714**
**EP-A- 0 175 668**
**EP-A- 0 257 011**
**US-A- 3 762 566**

(73) Patentinhaber: **Akzo N.V.**
**Postbus 186 Velperweg 76**
**NL-6800 LS Arnhem(NL)**

(72) Erfinder: **Smolders, Cornelius A.**
**D. Nijhoffstraat 15**
**NL-7552 GB Hengelo(NL)**
Erfinder: **Franken, Antonius Ch. M.**
**Beatrixstraat 72**
**NL-7511 KM Enschede(NL)**
Erfinder: **Mulder, Marcellinus H.V.**
**Spielehorst 11**
**NL-7531 ER Enschede(NL)**

(74) Vertreter: **Fett, Günter**
**Akzo Patente GmbH Kasinostrasse 19 - 23**
**W-5600 Wuppertal 1 (DE)**

**Beschreibung**

Die Erfindung betrifft ein Verfahren zum Herstellen einer aus einer selektiv wirkenden nichtporösen Polymermembranschicht (erste Schicht) und einer (mikro-)porösen Membranschicht (zweite Schicht) bestehenden Zweischichtmembran, bei welchem eine zur Bildung der ersten Schicht bestimmte wenigstens aus einem Polymer und einem Lösungsmittel für das Polymer bestehende Polymerlösung mit einer Seite der zweiten Schicht in Berührung gebracht und Lösungsmittel zum Verdampfen/Verdunsten gebracht wird.

Verfahren zum Herstellen einer Zweischichtmembran der eingangs beschriebenen Art sind bekannt.

Der vorliegenden Erfindung liegt die Aufgabe zugrunde, ein Verfahren zur Verfügung zu stellen, welches zu Zweischichtmembranen mit verbesserten Eigenschaften führt und welches sich insbesondere zur Durchführung an fertigen Einrichtungen (Modulen) zur Stofftrennung bzw. Stoff- und/oder Wärmeübertragung eignet.

Diese Aufgabe wird bei einem Verfahren der eingangs beschriebenen Art erfindungsgemäß dadurch gelöst, daß eine größere Menge Polymerlösung als zur Bildung der ersten Schicht erforderlich verwendet wird, daß das Verdampfen/Verdunsten von Lösungsmittel durch Absenken des Lösungsmittel(partial)-dampfdruckes auf der anderen Seite der zweiten Schicht bewirkt wird und somit durch die Poren der zweiten Schicht hindurch erfolgt, daß das Absenken des Lösungsmittel(partial)dampfdruckes so erfolgt, daß die Polymerlösung nicht zum Eindringen in die Poren der zweiten Schicht gebracht wird, daß nur ein Teil des Lösungsmittels der Polymerlösung zum Verdunsten/Verdampfen gebracht wird, daß nach Erreichen der gewünschten Dicke der ersten Schicht der Überschuß an Polymerlösung wieder entfernt wird und daß die erste Schicht danach einer Trocken- und/oder Vernetzungsbehandlung unterworfen wird.

Bei Verfahren zum Herstellen einer Zweischichtmembran der hier vorliegenden Art, die nicht an fertigen Einrichtungen (z.B. Modulen) durchgeführt werden können, besteht ein erheblicher Nachteil darin, daß es bei der weiteren Verarbeitung der Zweischichtmembran leicht zu einer Beschädigung der notwendigerweise zuvor auf die zweite Schicht aufgebrachten ersten sehr dünnen und daher sehr empfindlichen Schicht kommen kann. Dieser Nachteil kann mit dem erfindungsgemäßen Verfahren dadurch beseitigt werden, daß es erst dann durchgeführt wird, wenn die (mikro-)poröse (zweite) Schicht bereits in einer Einheit (z.B. Modul) fertig eingebaut ist.

Auf besonders einfache Weise läßt sich das erfindungsgemäße Verfahren dann durchführen, wenn die zweite Schicht in Form wenigstens eines Hohlfadens oder eines Rohres ausgebildet ist, wobei mit dem erfindungsgemäßen Verfahren die erste, also die nichtporöse, Schicht auf der Außenseite oder der Innenseite von hohlfaden- oder rohrförmigen porösen Membranen gebildet werden kann.

Das erfindungsgemäße Verfahren eröffnet somit die Möglichkeit, Einrichtungen (Module), die zur Stoffübertragung oder Stofftrennung mit Hilfe (mikro-)poröser Schichten (Membranen) bestimmt sind mit Hilfe des erfindungsgemäßen Verfahrens bei Bedarf nachträglich in beispielsweise für die Pervaporation geeignete Einrichtungen umzuwandeln. Auf diese Weise wird eine größere Flexibilität in der Verwendung ein- und desselben Ausgangstyps einer solchen Einrichtung erreicht.

Ein wichtiges Merkmal des erfindungsgemäßen Verfahrens ist, daß das Lösungsmittel dampfförmig, also nicht flüssig, durch die Poren der zweiten Schicht zur anderen Seite gelangt. Dadurch ist es möglich, eine Zweischichtmembran auch aus solchen porösen Schichten herzustellen, deren Poren größer als die Makromoleküle des für die erste Schicht verwendeten Polymeren sind. Andererseits ist nicht auszuschließen, daß es Zweischichtmembranen gibt, die - bedingt durch das zuvor genannte Verfahrensmerkmal - nach dem erfindungsgemäßen Verfahren nicht herstellbar sind, weil ein Eindringen des flüssigen Lösungsmittels der Polymerlösung in die Poren der zweiten Schicht nicht verhindert werden kann.

Zur Bildung der ersten Schicht können beispielsweise Celluloseacetat, Polysulfon, Polyvinylalkohol oder Polyacrylnitril verwendet werden.

Als Lösungsmittel eignen sich beispielsweise Dimethylsulfoxid (DMSO) bzw. Wasser. Die Polymerkonzentration in der Polymerlösung liegt vorzugsweise im Bereich von 1 - 7,5 Gew.-%. Dabei ist zu berücksichtigen, daß die Viskosität der Polymerlösung mit zunehmendem Gewichtsanteil des Polymers in der Lösung erheblich zunimmt. Bei Wasser als Lösungsmittel für die Polymerlösung sollte die zweite Schicht zumindest an der mit der Polymerlösung zu beaufschlagenden Seite (Oberfläche) hydrophobe Eigenschaften besitzen. In diesem Falle ist es dann möglich, beispielsweise eine mikroporöse zweite Schicht zu verwenden, deren maximale Porengröße ca. 1 $\mu$m beträgt.

Als zweite Schicht werden vorzugsweise, nicht jedoch ausschließlich, (mikro-)poröse Schichten bzw. Membranen verwendet, wie sie in der DE-PS 27 37 745, der DE-OS 28 33 493, der DE-OS 28 33 623, der DE-OS 30 49 557 und der DE-PS 32 05 289 beschrieben sind. Ein weiterer für die zweite Schicht geeigneter Werkstoff ist PVDF (Polyvinylidenfluorid).

2

Wenn für die zweite Schicht ein Werkstoff verwendet wird, der von dem Lösungsmittel der Polymerlösung nicht benetzt wird, so kann es aber auch vorteilhaft sein, die zu beschichtende Seite (Oberfläche) der zweiten Schicht, nicht jedoch das Innere der Poren, benetzbar zu machen. Geeignete Verfahren zur Erhöhung der Oberflächenspannung von festen Werkstoffen sind an sich bekannt. Ein geeignetes Verfahren für Polypropylen oder Polyester ist beispielsweise die Sulfonierung mit rauchender Schwefelsäure beispielsweise einer Lösung von 3% $SO_3$ in Schwefelsäure.

Das Absenken des Lösungsmittel(partial)dampfdruckes auf der nicht beschichteten Seite der zweiten Schicht kann durch Erzeugen von Unterdruck (Vakuum) oder durch Vorbeileiten eines Schleppgases (Trägergases), beispielsweise Stickstoff, erreicht werden. Bei Anwendung von Unterdruck darf dieser nicht so hoch eingestellt werden, daß die Polymerlösung in die Poren hineingesaugt wird. In Fällen, in welchen dies schon bei einem geringen Unterdruck erfolgt, ist deshalb die Schleppgasmethode angezeigt.

Das Trocknen und Vernetzen von Polyvinylalkoholschichten wurde im Bereich von 100 bis 150°C durchgeführt, wobei die Behandlungsdauer im Bereich von 30 bis 120 Minuten lag. Dabei zeigte sich, daß je nach Dauer der thermischen Behandlung eine thermische Schädigung der Schicht einsetzen kann. Das Vernetzen der ersten Schicht kann auch durch eine chemische Behandlung erfolgen. Das Vernetzen einer Polyvinylalkoholschicht auf chemischem Wege kann beispielsweise mit (Di-)Aldehyden, (Di-)Ketonen, (Di-)Carboxylsäuren u. dgl. erreicht werden. Auch hierbei wird die Vernetzung vorzugsweise bei Temperaturen oberhalb Raumtemperatur durchgeführt. Als brauchbar hat sich auch hierbei eine Behandlungsdauer von beispielsweise 30 Minuten bei 130°C erwiesen.

Während des Trocknens und Vernetzens kann auch ein Gasstrom an der ersten Schicht entlang, also beispielsweise bei einer Innenbeschichtung durch die Hohlfäden bzw. Rohre, geführt werden.

Gute Ergebnisse für die erste Schicht wurden mit Polyvinylalkohol mit einem Molekulargewicht von 72 000; 76 000; 95 000 bzw. 126 000 erreicht, wobei der Verseifungsgrad im Bereich von 96 bis 98% lag. In einigen Fällen wurde der Polymerlösung 0,05 Mol Maleinsäure pro Mol monomerem Polyvinylalkohol beigemischt. Maleinsäure wirkt als Vernetzungsmittel, so daß die Vernetzung bei niedrigeren Temperaturen durchgeführt werden kann.

Wird das erfindungsgemäße Verfahren mit einer Einrichtung durchgeführt, bei der die poröse zweite Schicht hohlfaden-oder rohrförmig ausgebildet ist, so kann die Polymerlösung mit einer im Bereich von beispielsweise 1 bis 350 mm/s liegenden Strömungsgeschwindigkeit durch die Hohlfäden bzw. Rohre gefördert werden, während gleichzeitig das Verdampfen/Verdunsten von Lösungsmittel durch die Poren der zweiten Schicht herbeigeführt wird. Durch einfache Versuche kann zuvor ermittelt werden, welche Schichtdicke die erste Schicht unter welchen Bedingungen in welcher Zeit erreicht. Bei Erreichen der gewünschten Schichtdicke kann dann der Überschuß an Polymerlösung aus den Hohlfäden bzw. Rohren entfernt werden, beispielsweise durch Auslaufenlassen, und die an der Innenseite der Hohlfäden bzw. Rohre verbleibende Polymerschicht (erste Schicht) getrocknet und einer chemischen oder thermischen Vernetzungsbehandlung unterworfen werden. Eine gleichmäßige Schichtdicke wird dabei dann erreicht, wenn während des Trocknens und Vernetzens die Einrichtung um ihre zu den Hohlfäden bzw. Rohren im wesentlichen parallel verlaufende Längsachse in Rotation versetzt wird, beispielsweise mit einer Drehzahl von 5 Umdrehungen pro Minute.

Mit einer Strömungsgeschwindigkeit von 4 mm/s konnte eine Polyvinylalkoholschicht mit einer im Bereich von 5 bis 80 $\mu$m liegenden Dicke, bei einer Strömungsgeschwindigkeit von 35 mm/s dagegen nur eine solche mit einer unterhalb 0,5 $\mu$m liegenden Schichtdicke hergestellt werden.

In Versuchen wurde die Zeit zur Bildung der ersten Schicht im Bereich von 30 Minuten bis 15 Stunden variiert. Dabei wurde festgestellt, daß bereits nach 30 Minuten annähernd die endgültige Schichtdicke erreicht wird. In der Regel sind daher 2 Stunden als ausreichend zu betrachten.

Es ist jedoch auch möglich, die erste, Schicht an der Außenseite der Hohlfäden bzw. Rohre anzubringen.

Ebenso ist es möglich, das erfindungsgemäße Verfahren zwei oder mehrmals hintereinander an derselben Seite der zweiten Schicht durchzuführen.

Die mit der ersten Schicht zu versehende Oberfläche der zweiten Schicht sollte eine nicht zu hohe Rauhigkeit aufweisen, da eine solche die Bildung einer geschlossenen, d.h. fehlstellenfreien nichtporösen Schicht erschwert.

Eine Schicht (Membran) wird dann als selektiv wirkend bezeichnet, wenn sie für die Komponenten eines Flüssigkeits-, Dampf- oder Gasgemisches unterschiedlich, insbesondere für eine Komponente besonders, permeabel ist und bei einem Flüssigkeitsgemisch demzufolge zu einer Verschiebung des Partialdampfdruckgleichgewichtes führt.

Nichtporöse Schichten (Membranen)werden häufig auch als porenfrei, dicht oder homogen bezeichnet.

3

Beispiele:

Versuche mit guten Ergebnissen wurden mit folgenden Hohlfäden als 2. Schicht durchgeführt:

| Polymer | PVDF | PVDF | PP |
|---|---|---|---|
| Innendurchmesser (μm) | 830 | 1 000 | 1 200 |
| Außendurchmesser (μm) | 1 230 | 1 500 | 1 800 |
| Wandstärke (μm) | 200 | 250 | 300 |
| größter Porendurchmesser (μm) | 0,25 | 0,6 | 0,38 |
| Porosität/Porenvolumen (%) | 75 | 82 | – |

Die Beschichtung mit PVA zur Bildung der ersten Schicht wurde mit einer zwei-, drei-, vier- und fünfprozentigen Polymerlösung durchgeführt. Das Molekulargewicht betrug 72.000; 76.000; 95.000 und 126.000. Der Verseifungsgrad betrug beim Molekulargewicht von 95.000 96%, in allen anderen Fällen 98%. Teilweise wurde der Polymerlösung 0,05 Mol% Maleinsäure pro Mol monomerem PVA beigemischt. Die Strömungsgeschwindigkeit der Polymerlösung in den Hohlfäden betrug 0 bis 350 mm/s, die Verweilzeit 0,5 bis 6,5 Stunden. Das Verdampfen/Verdunsten des Lösungsmittels erfolgte nach der Unterdruck- oder nach der Schleppgasmethode. Die erste Schicht war ab einer Schichtdicke von ca. 1 μm störstellenfrei; die maximale Schichtdicke betrug 80 μm.

Mit diesen Zweischichtmembranen wurden Pervaporationsversuche mit einem Gemisch aus 80 Gew.-% Äthanol und 20 Gew.-% Wasser bei Temperaturen im Bereich von 22°C bis 55°C und einer Strömungsgeschwindigkeit in den Hohlfäden von 0,35 m/s durchgeführt. Die dabei erzielten Flußraten (flux) betrugen 0,016 bis 5,4 l/m² • h, der Trennfaktor (Selektivität) $\alpha$ erstreckte sich dementsprechend von 130 bis 1,1.

Eine Erhöhung der Polymerkonzentration in der Lösung führte zu höheren Trennfaktoren bei geringfügigem Abfall der Flußraten. Eine Erhöhung der Gemischtemperatur führte zu einer erheblichen (fast bis zur zehnfachen) Erhöhung der Flußrate ohne nennenswerten Abfall des Trennfaktors (Selektivität) $\alpha$.

Die Beispiele zeigen darüber hinaus, daß es mit dem erfindungsgemäßen Verfahren möglich ist, die Dicke der ersten Schicht auf einfache Weise in weiten Grenzen einzustellen.

Die nach dem erfindungsgemäßen Verfahren hergestellte Zweischichtmembran eignet sich beispielsweise sehr gut für das in der DE-A-3 536 007 beschriebene Verfahren.

Die Erfindung wird nun anhand der Figuren näher erläutert. Es zeigen:

Figur 1    in vereinfachter schematischer Darstellungsweise die wesentlichen Merkmale des erfindungsgemäßen Verfahrens,

Figur 2    eine Versuchsanordnung zur Beschichtung eines porösen Hohlfadens auf seiner Innenseite.

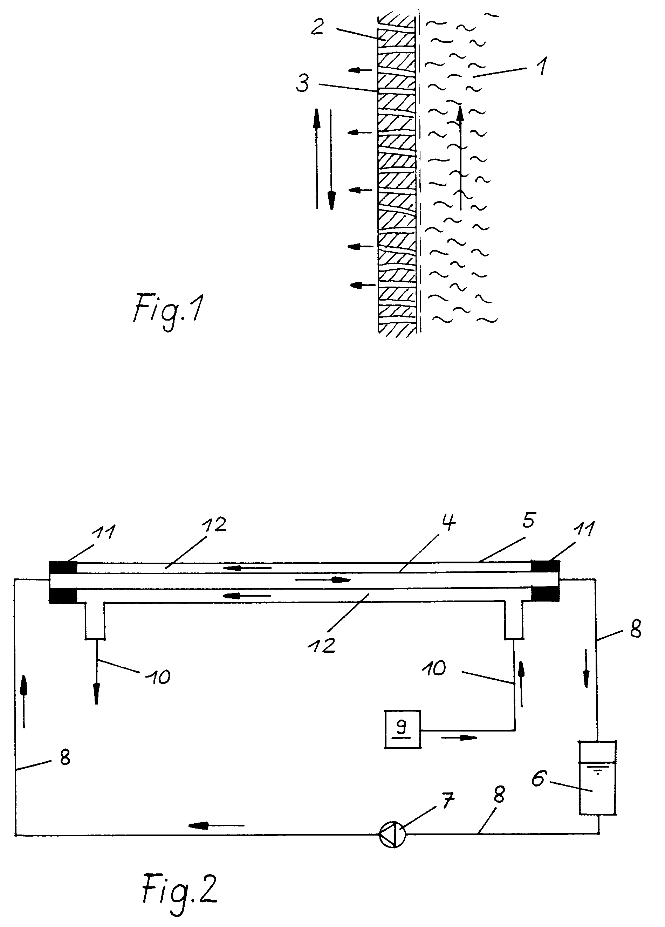

Figur 1 zeigt die Ausführungsform des Verfahrens, bei welcher die zur Bildung der ersten, also der nichtporösen, Schicht bestimmte Polymerlösung 1 entlang der zweiten, also der porösen, Schicht 2 in Strömung versetzt ist. Das Lösungsmittel verdampft/verdunstet durch die Poren 3 der zweiten Schicht 2, und zwar dadurch, daß entweder ein Trägergasstrom im Gleich- oder Gegenstrom an der anderen, nicht mit Polymerlösung beaufschlagten,Seite der zweiten Schicht 2 entlanggeführt oder Unterdruck (Vakuum) an dieser Seite eingestellt wird.

Die Versuchsanordnung in Figur 2 weist folgende Teile auf: Den auf seiner Innenseite mit der ersten Schicht zu versehenden porösen Hohlfaden (zweite Schicht) 4, das Gehäuse 5, mit welchem die Enden des Hohlfadens 4 fluiddicht verbunden sind, beispielsweise durch Eingießen mittels einer aushärtbaren Vergußmasse 11, das Vorratsgefäß 6 für die Polymerlösung, die Pumpe 7 und die Rohrleitungen 8 zum Umpumpen der Polymerlösung, einen Stickstoffvorratsbehälter 9 sowie die Stickstoff führenden Leitungen 10. Zum Aufbringen der ersten Schicht auf der Innenseite des Hohlfadens 4 wird die Polymerlösung mit der Pumpe 7 durch das Hohlfadeninnere (Lumen) gepumpt und während einer gewünschten Zeitdauer im Kreislauf umgepumpt. Gleichzeitig wird an der Außenseite des Hohlfadens 4 Stickstoff entlanggeführt, wodurch ein Verdunsten des Lösungsmittels der Polymerlösung durch die Poren des Hohlfadens 4 in den mit Stickstoff gefüllten den Hohlfaden 4 umgebenden Raum 12 des Gehäuses 5 und ein Abführen des Lösungsmittels aus dem Gehäuse 5 erreicht wird. Die weiteren, hier nicht dargestellten und näher beschriebenen Verfahrensschritte ergeben sich in naheliegender Weise aus dem oben Gesagten.

Am Beispiel der Figur 2 wird zudem deutlich, daß es mit dem erfindungsgemäßen Verfahren möglich ist, auf einfache Weise auch eine Vielzahl poröser Hohlfäden bzw. Rohre, die zu einem Bündel zusammengefaßt oder in einem gemeinsamen Gehäuse angeordnet sind, gleichzeitig mit einer nichtporösen (ersten) Schicht zu versehen.

**Patentansprüche**

1. Verfahren zum Herstellen einer aus einer selektiv wirkenden nichtporösen Polymermembranschicht (erste Schicht) und einer (mikro-)porösen Membranschicht (zweite Schicht) bestehenden Zweischichtmembran, bei welchem eine zur Bildung der ersten Schicht bestimmte wenigstens aus einem Polymer und einem Lösungsmittel für das Polymer bestehende Polymerlösung mit einer Seite der zweiten Schicht in Berührung gebracht und Lösungsmittel zum Verdampfen/Verdunsten gebracht wird, dadurch gekennzeichnet, daß eine größere Menge Polymerlösung als zur Bildung der ersten Schicht erforderlich verwendet wird, daß das Verdampfen/Verdunsten von Lösungsmittel durch Absenken des Lösungsmittel(partial)dampfdruckes auf der anderen Seite der zweiten Schicht bewirkt wird und somit durch die Poren der zweiten Schicht hindurch erfolgt, daß das Absenken des Lösungsmittel(partial)-dampfdruckes so erfolgt, daß die Polymerlösung nicht zum Eindringen in die Poren der zweiten Schicht gebracht wird, daß nur ein Teil des Lösungsmittels der Polymerlösung zum Verdunsten/Verdampfen gebracht wird, daß nach Erreichen der gewünschten Dicke der ersten Schicht der Überschuß an Polymerlösung wieder entfernt wird und daß die erste Schicht danach einer Trocken- und/oder Vernetzungsbehandlung unterworfen wird.

2. Verfahrn nach Anspruch 1, dadurch gekennzeichnet, daß die Polymerlösung entlang der zweiten Schicht in Strömung versetzt wird.

3. Verfahren nach Anspruch 1 oder 2, dadurch gekennzeichnet, daß während der Trocken- und/oder Vernetzungsbehandlung ein Gasstrom entlang der ersten Schicht geleitet wird.

**Claims**

1. A process for the preparation of a two layered membrane consisting of a selectively acting non-porous polymer membrane layer (first layer) and a (micro)porous membrane layer (second layer), in which a particular polymer solution for forming the first layer consisting of at least one polymer and a solvent for the polymer is brought into contact with one side of the second layer and the solvent is evaporated/vaporised, characterised in that a larger amount of polymer solution than is required to form the first layer is used, that evaporation/vaporisation of solvent is brought about by lowering the (partial) vapour pressure of the solvent on the other side of the second layer and therefore takes place through the pores in the second layer, that lowering of the (partial) vapour pressure of the solvent takes place in such a way that the polymer solution does not penetrate into the pores in the second layer, that only some of the solvent in the polymer solution is evaporated/vaporised, that after achieving the desired thickness for the first layer the excess polymer solution is removed again and that the first layer is then subjected to a drying and/or cross-linking treatment.

2. A process according to Claim 1, characterised in that the polymer solution is moved along the second layer in a stream.

3. A process according to Clad 1 or 2, characterised in that a stream of gas is passed along the first layer during the drying and/or cross-linking treatment.

**Revendications**

1. Procédé de préparation d'une membrane à deux couches, constituée d'une couche de membrane de polymère non poreuse, agissant de manière sélective (première couche) et d'une couche de membrane (micro-)poreuse (deuxième couche), dans lequel on met en contact une solution de polymère destinée à la formation de la première couche, constituée d'au moins un polymère et un solvant pour le polymère, avec un côté de la deuxième couche et fait s'évaporer/se vaporiser le solvant, **caractérisé** en ce que l'on utilise une quantité de solution de polymère plus grande que celle nécessaire à la formation de la première couche, on produit l'évaporation/la vaporisation du solvant par abaissement de la pression de vapeur (partielle) du solvant de l'autre côté de la deuxième couche, ladite évaporation/vaporisation se produisant ainsi par les pores de la deuxième couche, on effectue l'abaissement de la pression de vapeur (partielle) du solvant de telle manière que la solution de polymère ne pénètre pas dans les pores de la deuxième couche, on fait s'évaporer/se vaporiser seulement une partie du solvant de la solution de polymère, on élimine encore, une fois atteinte l'épaisseur souhaitée de la première couche, l'excès de solution de polymère et on soumet ensuite la première couche à un traitement de séchage et/ou de réticulation.

2.  Procédé selon la revendication 1, **caractérisé** en ce que l'on fait circuler la solution de polymère le long de la deuxième couche.

3.  Procédé selon la revendication 1 ou 2, **caractérisé** en ce que l'on fait passer un courant de gaz le long de la première couche pendant le traitement de séchage et/ou de réticulation.

Fig.1

Fig.2